# EUROPEAN PATENT SPECIFICATION

(11) **EP 3 822 072 B1**
(45) Date of publication and mention of the grant of the patent: **01.01.2025**
(21) Application number: 19383000.7
(22) Date of filing: 14.11.2019
(51) Int. Cl.: B32B 3/06, B32B 3/10, B32B 3/12, B32B 5/26, B32B 9/02, B32B 9/04, B32B 27/12, B32B 27/28, B32B 27/30, B32B 27/36, B32B 5/02

(54) **FIREPROOF AND THERMAL INSULATOR PRODUCT**
FEUERFESTES UND WÄRMEISOLIERENDES PRODUKT
PRODUIT ISOLANT THERMIQUE ET RÉSISTANT AU FEU

(43) Date of publication of application: 19.05.2021
(73) Proprietor: Airbus Operations, S.L., 28906 Getafe (ES)
(72) Inventor: VAZQUEZ DE CASTRO, Jesus Javier, 28906 Getafe (ES); HERNAIZ LOPEZ, Guillermo, 28906 Getafe (ES); ARANA HIDALGO, Alberto, 28906 Getafe (ES); BUTRAGUEÑO MARTINEZ, Asuncion, 28905 Getafe (ES); BALLESTERO MENDEZ, Jorge, 28906 Getafe (ES); INIESTA LOZANO, Fernando, 28906 Getafe (ES); VAZQUEZ SANCHEZ, Pablo, 08005 Barcelona (ES); KEMPF, Manuel, 86609 Donauwörth (DE)

(56) References cited:
- EP-A1- 3 636 427
- WO-A1-2013/120148
- CN-A- 103 422 641
- CN-U- 208 311 794
- GB-A- 2 568 688
- JP-A- H11 198 264
- US-A1- 2019 207 188

## Description

### Field of the invention

This invention refers to a product that provides structures and associated systems with protection against the consequences of a fire event, particularly flame penetration, and that also provides thermal insulation capability. The invention is particularly applicable in different parts of aircrafts and helicopters.

### Background of the invention

Many parts of the aircraft are submitted to fire events, and in order to ensure the normal operation of the aircraft, the structure and associated systems have to be protected against the fire event consequences.

For these purposes, several materials and solutions have been tested and installed to prevent the consequences of the fire events. Two main effects need to be solved depending on the application: flame penetration and thermal insulation.

The flame penetration issue needs to be addressed keeping the fire enclosed in the designated area. On the other hand, the thermal insulation capability may allow the use of a wide range of materials for the structural applications having less decoupling temperature requirements.

The most widely used state of the art solution are the thermal blankets, mainly made of ceramic or silicone laminates with aluminum sheet. They are an effective solution for flame penetration and thermal insulation, but are also expensive and heavy.

Thermal blanket insulations may present some issues to be introduced in structural applications due to its lack of rigidity. Due to this, they could collapse during the manufacturing or assembly process, leading to a loss of their effectiveness.

Another state of the art solution is based on materials which work against a fire event by creating a porous charred layer of material, preventing the flame penetration and providing insulation. This option is relevant in many applications due to its performance, however structures submitted to vibrations cannot implement this solution due to the loss of protection under the operation conditions.

In a further state of the art solution, materials like titanium, steel or Inconel that exhibit higher fire-resistant/fire-proof capability are added or used instead of conventional materials usually used for structural parts such as aluminium, composite (CFRP, GFRP, etc.) in order to overcome the fire penetration issue. As example of this can be appreciated in the APU of an aircraft, which can be surrounded by a titanium firewall to prevent the aluminum (acting as structural material) to be damaged, and letting the fire come out of the tail cone in a fire event.

GB2568688A discloses a fireproof and thermal insulator product having the structure: mica paper sheet /scrim layer/core layer/scrim layer,mica paper sheet, where the core is AES and the scrim layer is a glass cloth impregnated in a resin binder. A protective coat may be provided to cover the entirety of the laminate. Suitable materials may comprise polymeric sheets heat laminated to the laminate.

### Summary of the invention

The object of the present invention is to provide a product that is fireproof and has also good thermal insulation capability, which allows to avoid high temperatures at the structure around the fire source that could damage said structure.

The invention provides a fireproof and thermal insulator product comprising a material combination of:
- Alkaline Earth Silicate (AES) material, and
- a liquid barrier film, an FRP (Fibre Reinforcement Plastic) layer, and cork,

wherein the liquid barrier film and the FRP layer are staked onto the AES material,
and wherein the cork material is also staked onto the AES material or embedded into said AES material, and where in this last case in which the cork is embedded the AES material, the cork is configured as a plurality of strips performing a grid structure infilled with the AES material.

The invention provides the following advantages:
- Lower cost than the state of the art solutions.
- Low density material used, allowing weight reduction and lighter solutions than state of the art.
- Fire-proof and thermal insulation capabilities ensured by test.
- Environmentally friendly.
- Integration in structural panels with potential cost reduction, while avoiding the issue of collapsing the insulation material during the manufacturing and/or assembly process.
- Enable the use of structural materials in fire-zone designated areas with limited high-temperature strength capability, thanks to the decoupling of thermal and structural requirements.

Other characteristics and advantages of the present invention will be clear from the following detailed description of several embodiments illustrative of its object in relation to the attached figures.

### Brief description of drawings

Figure 1 shows a schematic view of a fireproof and thermal insulator product, according to a first preferred embodiment of the invention.
Figure 2 shows a schematic view of the thermal behaviour of the cork.
Figure 3 shows a schematic view of a fireproof and thermal insulator product, not belonging to the invention.
Figures 4a-4c show a schematic view of a fireproof and thermal insulator product, according to different preferred embodiment of the invention. Figure 4a shows a top view. Figure 4b shows a cross-sectional view of the fireproof and thermal insulator product according to a third preferred embodiment of the invention. Figure 4c shows a cross-sectional view of the fireproof and thermal insulator product according to a fourth preferred embodiment of the invention.
Figure 5a shows an aircraft having an APU compartment on its rear end, in which at least one firewall includes the fireproof and thermal insulator product of the invention. Figure 5b shows a detailed view of the APU compartment.
Figures 6a and 6b respectively shows a front firewall of an APU compartment.
Figure 7a shows an exploded view of a battery and its casing. Figure 7b shows a perspective view of the main element of the casing.
Figure 8 shows an engine deck for a helicopter comprising the fireproof and thermal insulator product of the invention.
Figure 9 shows a helicopter engine compartment having a central wall comprising the fireproof and thermal insulator product of the invention.

### Detailed description of the invention

It is important to take into account that the "fireproof" concept is defined by aeronautical regulations such as:
- FAR/JAR 25.1191: Firewalls-Definition.
- FAR/JAR 25.865: Fire Protection Of Flight Controls, Engine Mounts And Other Flight Structures.

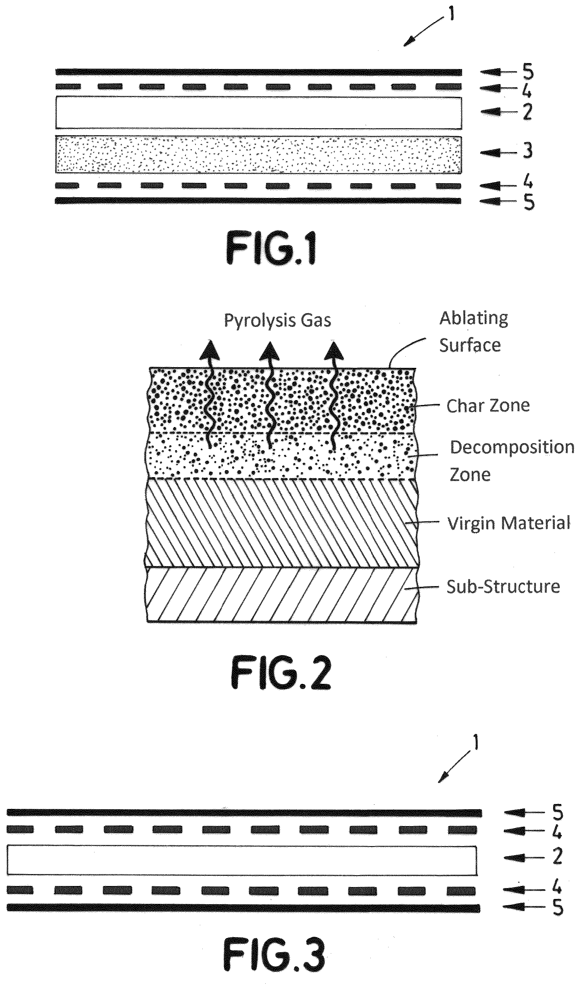

Figure 1 shows a first preferred configuration of the fireproof and thermal insulator product 1 of the invention that comprises a stack of layers including a layer of cork 3, and a layer of Earth Silicate material (AES) 2 at the side of the product 1 intended to face the fire. The layer of AES 2 mainly acts as a fireproof barrier, and in a second level as thermal insulator, while layer of cork 3 acts as thermal insulator.

The AES and cork layers 2, 3 needs to incorporate a protection against aggressive fluids, mainly for the AES 2. For that, a pair of liquid barrier films 5, and a pair of layers of FRP (Fibre Reinforcement Plastic) 4 are placed at both sides of the product 1. The pair of layers of FRP 4 are intended to perform the adhesion to the AES and the cork.

Preferably, the liquid barrier film 5 is a PVF (Poly-Vinyl Fluoride) film or similar material (PEEK, PDVF, PET...). And preferably, the FRP layer 4 is a GFRP layer.

The embodiment shown in Figure 1 is a good solution for non-structural protections that could be placed in many areas as add-ons over a structure in order to protect it from fire and temperature.

Additionally to the thermal insulation by low heat conductivity of the cork material itself, this material exhibits following important characteristics for this specific application. As shown in

Figure 2, the closed cell (micro)structure acts as effective barrier against hot fire gases and its degradation under severe heat impact produces a further thermally insulating char layer on the surface directed towards the fire / heat source. Pyrolysis gases are considered to provide some insulating effects as well.

Figure 3 shows a second configuration of a fireproof and thermal insulator product 1 not belonging to the invention that comprises a stack of layers including a layer of Earth Silicate material (AES) 2, a pair of layers of FRP (Fibre Reinforcement Plastic) 4 at both sides of the AES 2, and a pair of liquid barrier films 5 at both sides of the FRP layers 4. In this second preferred configuration, the layer (or several layers) of AES acts as fireproof barrier and thermal insulation solution.

Similar to the embodiment of Figure 1, this second configuration appears as a good solution for non-structural protections that could be placed in many areas as add-ons over the structure in order to protect it from fire and temperature.

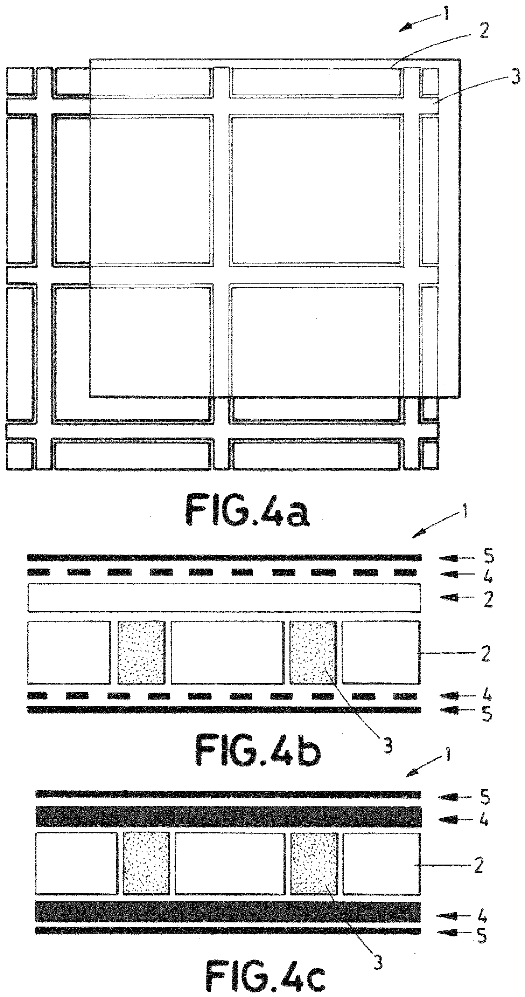

Figures 4a-4c show another preferred embodiments of the fireproof and thermal insulator product 1. In this embodiments, the product 1 comprises a stack of layers including a layer formed by AES 2 and cork 3, the cork 3 configured as a plurality of strips performing a grid structure (lattice) infilled with the AES material 2. This is schematically shown in Figure 4a.

This option is introduced as a more rigid protection that could be placed over a structure or included inside a structural laminate acting as the core of a sandwich panel. Additionally, in this case, the cork is acting as a rigid structure preventing collapse of the insulator material during the curing in the autoclave due to the high pressure exerted.

Figure 4b shows a third preferred embodiment in which the layer formed by a lattice of cork 3 infilled with AES 2 further comprises an additional layer of AES 2 deposited onto the layer consisting of AES+cork, a pair of layers of FRP (Fibre Reinforcement Plastic) 4 at both sides of the layer of AES+cork and the additional layer of AES 2, and a pair of liquid barrier films 5 at both sides of the FRP layers 4. In this third preferred configuration, the layer or several layers of AES acts as fireproof barrier and thermal insulation solution. Preferably, the FRP layer 4 is a GFRP layer.

Figure 4c shows a fourth preferred embodiment in which the layer formed by a lattice of cork 3 infilled with AES 2 further comprises a pair of layers of FRP (Fibre Reinforcement Plastic) 4 at both sides of the layer consisting of AES+cork, and a pair of liquid barrier films 5 at both sides of the FRP layers 4. In this fourth preferred configuration, the FRP layer acts as fireproof barrier and thermal insulation solution. This fourth embodiment is very promising for the direct integration as part of a composite structure. Preferably, the FRP layer 4 is a CFRP layer.

The first preferred embodiment (Figure 1) has been tested by means of a bunsen trial. The testing sample had a 2mm layer of AES 2 and an 8mm layer of cork 3, and following conditions were applied:
- Direct flame impingement for 15min.
- Calibrated Flame of 1100ºC.
- No load or vibration applied.
- Protection against fluids of GFRP and PVF covering both layers.

The result after the 15 minutes required with the 1100ºC flame, was that, not only there is NO pass through of the flame, but also the temperature measured at the rear part of the specimen was 220ºC.

The third preferred embodiment (Figure 4b) has been tested fulfilling the FAR/JAR 25 regulations regarding firewalls, FAR/JAR25.1191 & FAR/JAR25.865, that is:
- Direct flame impingement for 15min.
- Calibrated Flame of 1100ºC at a distance of 100mm from the specimen.
- Calibrated Heat Flux.
- Specimen under vibration of 50 Hz (reduced to 16.6 Hz after 5 min.).
- No load applied.
- Protection against fluids of GFRP and PVF covering the infilled core.

The result after the 15 minutes required with the 1100ºC flame, was that, not only there is NO pass through of the flame, but also the temperature measured at the rear part of the specimen was 240ºC with peaks around 300ºC on fastener hot spots.

According to another aspect, the invention also refers to a composite part (non-structural part) that comprises the fireproof and thermal insulator product as the ones shown in the first or in the second preferred embodiments. In these cases, the product is attached to the part by means of fasteners, by a bonding, or by a Velcro type junction. In case that the attachment is by means of fasteners, the use of washers will be preferably, and they will be mounted creating an air chamber between the part and the product.

According to another preferred embodiment, the composite part (structural part) comprises the fireproof and thermal insulator product, as the ones shown in the third or in the fourth preferred embodiments. In these cases, the product 1 is bonded or co-cured to the part.

Hereafter a list of potential embodiments of the proposed invention:

### • Firewall of the rear end of an aircraft:

- Sizing constraint: Fire-proof and Thermal protection
- Modification: Replace current Titanium firewall by a new protection based in the proposed solutions, preferably first or second preferred embodiments.
- Benefits: Safety improvement, RC reduction, In case of fire, neither flame nor heat will affect the structure of the rear end of the aircraft, so there will be no need to replace it after fire event.

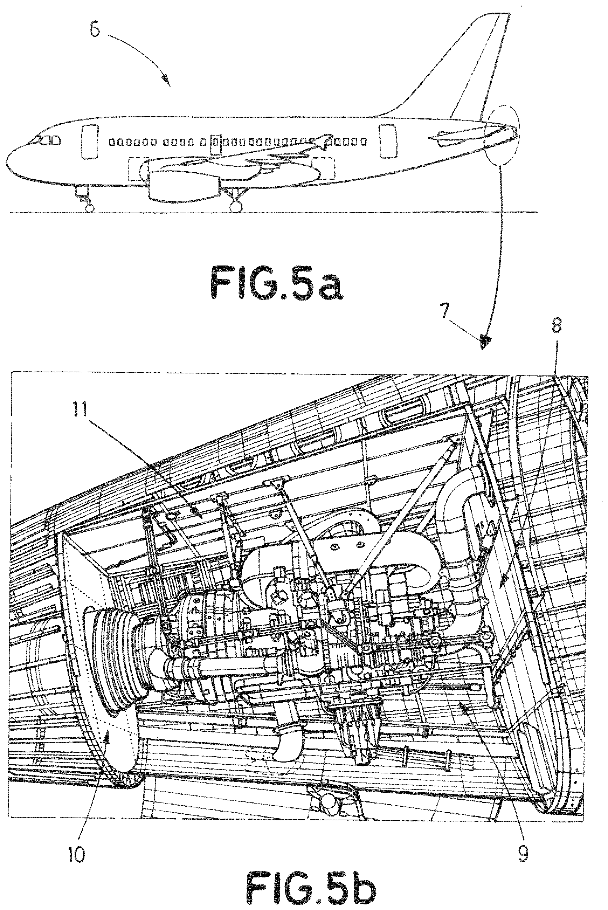

According to another aspect, the invention also refers to a rear end of an aircraft 6, comprising an APU compartment 7 insulated by at least one firewall 8, 9, 10, 11 that comprises the fireproof and thermal insulator product 1. Figure 5a shows an aircraft 6 having an APU compartment 7 on its rear end. Figure 5b shows a detailed view of the APU compartment 7 and most of its walls: the front firewall 8, the lateral firewall 9, the rear firewall 10, and the upper firewall 11, in where at least one of its walls includes the fireproof and thermal insulator product 1.

### • Front firewall of the rear end of an aircraft:

- Sizing constraint: Fire-proof and Thermal protection
- Modification: Replace current Titanium firewall and aluminium stringers by a new protection based in the proposed solutions, preferably third or fourth preferred embodiments.
- Benefits: Safety improvement, RC reduction, In case of fire, neither flame nor heat will affect the structure of the firewall, so there will be no need to replace it after fire event.

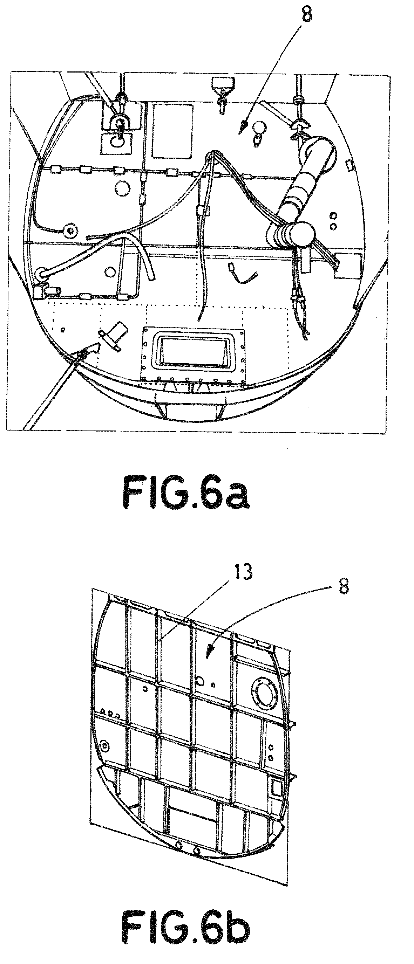

According to another aspect, the invention also refers to a front firewall 8 that comprises the fireproof and thermal insulator product 1. Figures 6a and 6b show a front firewall 8 of an APU compartment. Figure 6b shows the stringers 13 that can be replaced by the proposed invention.

### • Battery Casing:

- Sizing constraint: Thermal protection
- Modification: Replace current metal casing by composite ones based in the proposed solution,
- Benefits: Safety improvement, RC reduction, Weight reduction.

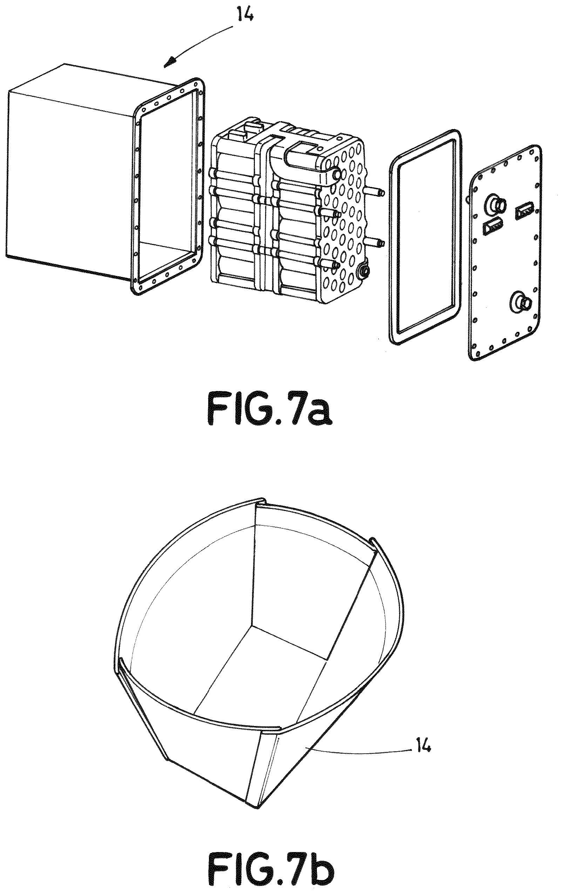

According to another aspect, the invention also refers to a battery casing 14 that comprises the fireproof and thermal insulator product 1. Figure 7a shows an exploded view of a battery and its casing. Figure 7b shows a perspective view of the main element of the casing.

### • Composite fireproof duct:

- Sizing constraint: Thermal protection
- Modification: Replace current Titanium ducts by composite ones based in the proposed solution, preferably 3rd option.
- Benefits: Safety improvement, RC reduction.

According to another aspect, the invention also refers to a duct comprising the fireproof and thermal insulator product 1.

### • Helicopter engine deck:

- Sizing constraint: primary structure, thermal protection
- Modification: Replace current Titanium skin and stringers by a composite sandwich with integrated fire & thermal protection.
- Benefits: Weight saving by enabling a CFRP composite engine deck design, no mismatch of thermal expansion coefficient between engine deck and CFRP composite airframe

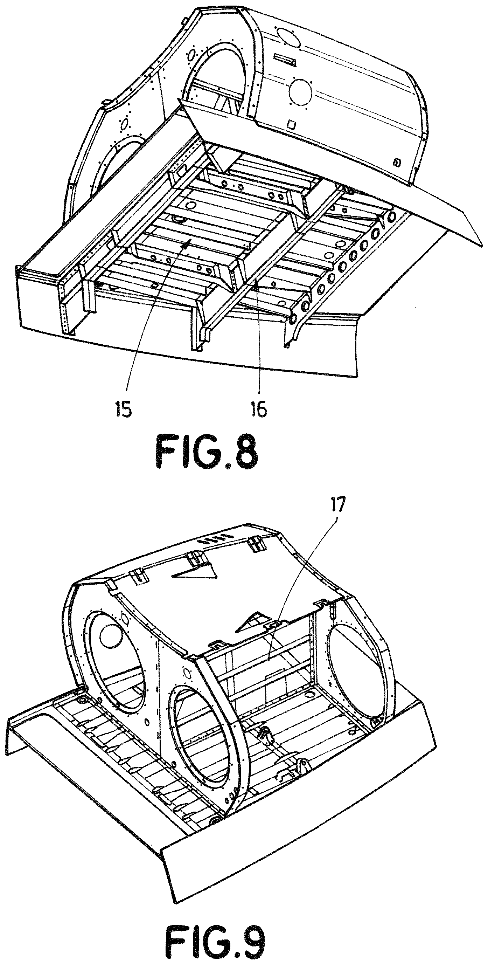

According to another aspect, the invention also refers to a helicopter engine deck 15 that comprises the fireproof and thermal insulator product 1. Figure 8 shows an engine deck 15 including a titanium skin, stringers, clips and gusstes, over a framework 16 usually made of aluminium.

### • Helicopter engine compartment central firewall:

- Sizing constraint: stiffened panel, Thermal protection
- Modification: Replace current stiffened Titanium skin by a composite sandwich with integrated fire & thermal protection.
- Benefits: less maintenance and repair, increased value for the customer

According to another aspect, the invention also refers to a helicopter having an engine compartment including a central firewall 17 that comprises the fireproof and thermal insulator product 1. Figure 9 shows a helicopter engine compartment having a central wall 17 comprising the fireproof and thermal insulator product 1.

Although the present invention has been fully described in connection with preferred embodiments, it is evident that modifications may be introduced within the scope thereof, not considering this as limited by these embodiments, but by the contents of the following claims.

## Claims

1. Fireproof and thermal insulator product (1), which comprises the combination of:
- Alkaline Earth Silicate (AES) material (2),
- a liquid barrier film (5),
- an FRP (Fibre Reinforcement Plastic) layer (4), and
- cork (3),
- wherein the liquid barrier film (5) and the FRP layer (4) are staked onto the AES material (2),
- and wherein the cork (3) material is also staked onto the AES material (2) or embedded into said AES material (2) with the cork (3) being configured as a plurality of strips performing a grid structure infilled with the AES material (2).

2. Fireproof and thermal insulator product (1), according to claim 1, wherein the liquid barrier film (5) is a thermoplastic film, and preferably a PVF (Poly-Vinyl Fluoride) film, a PEEK film, a PDVF film, or a PET film.

3. Fireproof and thermal insulator product (1), according to any previous claims, wherein the FRP layer (4) is a GFRP (Glass Fibre Reinforcement Plastic) layer or a CFRP (Carbon Fibre Reinforcement Plastic) layer.

4. Fireproof and thermal insulator product (1), according to any previous claims, further comprising an adhesive layer (6) to bond the liquid barrier film (5) to the AES material (2).

5. Fireproof and thermal insulator product (1), according to any previous claims, that comprises a stack of plies formed by a first ply of cork (3), a second ply of AES (2), and at least one FRP layer (4) enclosing by one side the stack formed by the first and second plies (3, 2).

6. Fireproof and thermal insulator product (1), according to any of claims 1 to 4, that comprises a stack of plies formed by a first ply of cork (3) embedded into the AES material (2), and at least one layer of AES material (2) or FRP (4) on top of said cork and AES layer to reinforce the fireproofness of the product (1).

7. Fireproof and thermal insulator product (1), according to claim 6, further comprising a liquid barrier film (5) and/or a FRP (Fibre Reinforcement Plastic) layer (4) at least at one side of the product (1).

8. A composite part comprising the fireproof and thermal insulator product (1) according to any of claims 1-5, wherein the product (1) is attached to the part by means of fasteners, and preferably by washers mounted creating an air chamber between the part and the product (1), by a bonding, or by a Velcro type junction.

9. A composite part comprising the fireproof and thermal insulator product (1) according to any of claims 6-7, wherein the product (1) is bonded or co-cured to the part.

10. A rear end of an aircraft (6), comprising an APU compartment (7) insulated by at least one firewall (8, 9, 10, 11) that comprises the fireproof and thermal insulator product (1) according to any of claims 1-7.

11. A rear end of an aircraft (6), comprising an APU compartment (7) having at least one front firewall (8) that comprises the fireproof and thermal insulator product (1) according to any of claims 6-7.

12. A duct comprising the fireproof and thermal insulator product (1) according to any of claims 6-7.

13. A battery casing (14) comprising the fireproof and thermal insulator product (1) according to any of claims 1-7.

14. An helicopter having an engine deck (15) that comprises the fireproof and thermal insulator product (1) according to any of claims 1-7.

15. An helicopter having an engine compartment including a central firewall (17) that comprises the fireproof and thermal insulator product (1) according to any of claims 1-7.

## Patentansprüche

1. Feuerfestes und wärmeisolierendes Produkt (1), das eine Kombination aus Folgendem enthält:
- Erdalkalisilikat-Material (AES-Material) (2),
- einen Flüssigkeitsperrenfilm (5),
- eine FRP-Schicht (faserverstärkte Kunststoffschicht) (4) und
- Kork (3),
- wobei der Flüssigkeitsperrenfilm (5) und die FRP-Schicht (4) auf das AES-Material (2) gestapelt sind,
- und wobei das Korkmaterial (3) ebenfalls auf das AES-Material (2) gestapelt ist oder in das AES-Material (2) eingebettet ist, wobei der Kork (3) in mehreren Streifen konfiguriert ist, die eine Gitterstruktur bilden, deren Lücken mit dem AES-Material (2) gefüllt sind.

2. Feuerfestes und wärmeisolierendes Produkt (1) nach Anspruch 1, wobei der Flüssigkeitsperrenfilm (5) ein thermoplastischer Film ist und vorzugsweise ein PVF-Film (Polyvinylchlorid-Film), ein PEEK-Film, ein PDVF-Film oder ein PET-Film ist.

3. Feuerfestes und wärmeisolierendes Produkt (1) nach einem der vorhergehenden Ansprüche, wobei die FRP-Schicht (4) eine GFRP-Schicht (glasfaserverstärkte Kunststoffschicht) oder eine CFRP-Schicht (kohlenstofffaserverstärkte Kunststoffschicht) ist.

4. Feuerfestes und wärmeisolierendes Produkt (1) nach einem der vorhergehenden Ansprüche, das ferner eine Klebstoffschicht (6) enthält, um den Flüssigkeitsperrenfilm (5) an dem AES-Material (2) anzuhaften.

5. Feuerfestes und wärmeisolierendes Produkt (1) nach einem der vorhergehenden Ansprüche, das einen Stapel von Lagen enthält, die durch eine erste Korklage (3), eine zweite AES-Lage (2) und wenigstens eine FRP-Schicht (4), die mit einer Seite den durch die erste und die zweite Lage (3, 2) gebildeten Stapel umschließt, gebildet ist.

6. Feuerfestes und wärmeisolierendes Produkt (1) nach einem der Ansprüche 1 bis 4, das einen Stapel von Lagen enthält, der durch eine erste Korkklage (3), die in das AES-Material (2) eingebettet ist, und wenigstens eine Schicht aus AES-Material (2) oder aus FRP (4) auf der Oberseite der Kork- und der AES-Lagen gebildet ist, um die Feuerfestigkeit des Produkts (1) zu erhöhen.

7. Feuerfestes und wärmeisolierendes Produkt (1) nach Anspruch 6, das ferner einen Flüssigkeitsperrenfilm (5) und/oder eine FRP-Schicht (faserverstärkte Kunststoffschicht) (4) wenigstens auf einer Seite des Produkts (1) enthält.

8. Verbundteil, das das feuerfeste und wärmeisolierende Produkt (1) nach einem der Ansprüche 1-5 enthält, wobei das Produkt (1) an dem Teil durch Befestigungseinrichtungen, vorzugsweise durch montierte Unterlegscheiben, die zwischen dem Teil und dem Produkt (1) eine Luftkammer erzeugen, durch Kleben oder durch eine Verbindung des Velcro-Typs befestigt ist.

9. Verbundteil, das das feuerfeste und wärmeisolierende Produkt (1) nach einem der Ansprüche 6-7 enthält, wobei das Produkt (1) an das Teil geklebt oder gemeinsam mit ihm gehärtet ist.

10. Hinteres Ende eines Luftfahrzeugs (6), das ein APU-Fach aufweist, das durch wenigstens einen Brandspant (8, 9, 10, 11) isoliert ist, der das feuerfeste und wärmeisolierende Produkt (1) nach einem der Ansprüche 1-7 enthält.

11. Hinteres Ende eines Luftfahrzeugs (6), das ein APU-Fach aufweist, das wenigstens einen Brandspant (8) besitzt, der das feuerfeste und wärmeisolierende Produkt (1) nach einem der Ansprüche 6-7 enthält.

12. Rohr, das das feuerfeste und wärmeisolierendes Produkt (1) nach einem der Ansprüche 6-7 enthält.

13. Batteriegehäuse (14), das das feuerfeste und wärmeisolierende Produkt (1) nach einem der Ansprüche 1-7 enthält.

14. Helikopter, der eine Maschinenblockoberseite (15) besitzt, die das feuerfeste und wärmeisolierende Produkt (1) nach einem der Ansprüche 1-7 enthält.

15. Helikopter, der einen Maschinenraum besitzt, der einen zentralen Brandspant (17) enthält, der das feuerfeste und wärmeisolierende Produkt (1) nach einem der Ansprüche 1-7 enthält.

## Revendications

1. Produit résistant au feu et thermiquement isolant (1), qui comprend la combinaison :
- d'un matériau en silicate alcalino-terreux (AES) (2),
- d'un film faisant barrière aux liquides (5),
- d'une couche de FRP (plastique renforcé de fibres) (4), et
- de liège (3),
- dans lequel le film faisant barrière aux liquides (5) et la couche de FRP (4) sont empilés sur le matériau AES (2),
- et dans lequel le matériau en liège (3) est également empilé sur le matériau AES (2) ou incorporé à l'intérieur dudit le matériau AES (2) avec le liège (3) configuré comme une pluralité de bandes constituant une structure de grille remplie avec le matériau AES (2).

2. Produit résistant au feu et thermiquement isolant (1) selon la revendication 1, dans lequel le film faisant barrière aux liquides (5) est un film thermoplastique, et de préférence un film de PVF (polyfluorure de vinyle), un film de PEEK, un film de PVDF, ou un film de PET.

3. Produit résistant au feu et thermiquement isolant (1) selon l'une quelconque des revendications précédentes, dans lequel la couche de FRP (4) est une couche de GFRP (plastique renforcé de fibres de verre) ou une couche de CFRP (plastique renforcé de fibres de carbone).

4. Produit résistant au feu et thermiquement isolant (1) selon l'une quelconque des revendications précédentes, comprenant en outre une couche adhésive (6) pour coller le film faisant barrière aux liquides (5) au matériau AES (2) .

5. Produit résistant au feu et thermiquement isolant (1) selon l'une quelconque des revendications précédentes, qui comprend un empilement de plis formé par un premier pli de liège (3), un deuxième pli d'AES (2), et au moins une couche de FRP (4) enveloppant par un côté l'empilement formé par les premier et deuxième plis (3, 2).

6. Produit résistant au feu et thermiquement isolant (1) selon l'une quelconque des revendications 1 à 4, qui comprend un empilement de plis formé par un premier pli de liège (3) incorporé à l'intérieur du matériau AES (2) et au moins une couche de matériau AES (2) ou de FRP (4) au-dessus de ladite couche de liège et d'AES pour renforcer la résistance au feu du produit (1).

7. Produit résistant au feu et thermiquement isolant (1) selon la revendication 6, comprenant en outre un film faisant barrière aux liquides (5) et/ou une couche de FRP (plastique renforcé de fibres) (4) au moins sur un côté du produit (1).

8. Pièce composite comprenant le produit résistant au feu et thermiquement isolant (1) selon l'une quelconque des revendications 1 à 5, le produit (1) étant attaché à la pièce au moyen de fixations, et de préférence par des rondelles montées pour créer une chambre à air entre la pièce et le produit (1), par collage, ou par une jonction de type Velcro.

9. Pièce composite comprenant le produit résistant au feu et thermiquement isolant (1) selon l'une quelconque des revendications 6 et 7, le produit (1) étant collé ou co-durci à la pièce.

10. Extrémité arrière d'un aéronef (6), comprenant un compartiment APU (7) isolé par au moins une cloison pare-feu (8, 9, 10, 11) qui comprend le produit résistant au feu et thermiquement isolant (1) selon l'une quelconque des revendications 1 à 7.

11. Extrémité arrière d'un aéronef (6), comprenant un compartiment APU (7) ayant au moins une cloison pare-feu avant (8) qui comprend le produit résistant au feu et thermiquement isolant (1) selon l'une quelconque des revendications 6 et 7.

12. Conduit comprenant le produit résistant au feu et thermiquement isolant (1) selon l'une quelconque des revendications 6 et 7.

13. Boîtier de batterie (14) comprenant le produit résistant au feu et thermiquement isolant (1) selon l'une quelconque des revendications 1 à 7.

14. Hélicoptère ayant un plancher moteur (15) qui comprend le produit résistant au feu et thermiquement isolant (1) selon l'une quelconque des revendications 1 à 7.

15. Hélicoptère ayant un compartiment moteur comportant une cloison pare-feu centrale (17) qui comprend le produit résistant au feu et thermiquement isolant (1) selon l'une quelconque des revendications 1 à 7.
